# EUROPEAN PATENT SPECIFICATION

(11) **EP 0 344 780 B1**
(45) Date of publication and mention of the grant of the patent: **06.12.1995**
(21) Application number: 89109945.9
(22) Date of filing: 01.06.1989
(51) Int. Cl.: F02D 9/02, F02M 3/08

(54) **Intake control device for engine**
Einlasssteuervorrichtung für Brennkraftmaschinen
Dispositif de commande d'admission pour moteur

(30) Priority: 03.06.1988 JP 135610/88
(43) Date of publication of application: 06.12.1989
(73) Proprietor: YAMAHA MOTOR CO., LTD., Iwata-shi Shizuoka-ken, 438 (JP)
(72) Inventor: Matsumoto, Hiromitsu, Hamamatsu-shi Shizuoka-ken (JP)
(74) Representative: Grünecker, Kinkeldey, Stockmair & Schwanhäusser Anwaltssozietät

(56) References cited:
- US-A- 4 714 063
- PATENT ABSTRACTS OF JAPAN, vol. 7, no. 16 (M-187)[1161], 22nd January 1983; & JP-A-57 173 526 (TOYO KOGYO K.K.) 25-10-1982
- PATENT ABSTRACTS OF JAPAN, vol. 7, no. 240 (M-251)[1385], 25th October 1983; & JP-A-58 126 427 (SHIYUUICHI KITAMURA) 27-07-1983
- PATENT ABSTRACTS OF JAPAN, vol. 9, no. 202 (M-405)[1925], 20th August 1985; & JP-A-60 65 230 (YAMAHA HATSUDOKI K.K.) 15-04-1985

## Description

The present invention relates to an air intake control device for an internal combustion engine as indicated in the preamble of claim 1.

One of the factors which reduces the thermal efficiency of an engine is the so-called pump loss. A major cause of the pump loss is the intake airflow resistance through a narrowed intake passage around a throttle valve at the time of a low engine load operation when the opening of the throttle valve is small.

A known example for reducing the pump loss is the so-called Miller-cycle engine (disclosed for example in the Japanese publication No 58-40260 (utility model), No 60-536 (patent), No 60-65230 (patent) etc) wherein a rotary valve provided on the downstream side of a throttle valve in an intake passage substantially closes said intake passage while an intake valve is open.

The known engines enumerated above, however, had the disadvantage that the rotary valve of a large size for closing and opening the intake passage was interposed in the intake passage and not only excessively increased the airflow resistance and lowered a high load performance but also required a large amount of power to rotate the rotary valve and impeded the increase in the output at the time of low load operation.

JP 57-173526 shows an intake control device comprising a trottle valve and a secondary valve provided in an intake passage and an intake opening/closing valve provided in a low speed air passage bypassing said secondary valve.

An air intake control device according to the preamble of claim 1 is known from US 4,714,063. This known intake control device is however unsatisfactory with respect to the arrangement of the low speed air passage and the timing of the operation of the intake opening/closing valve, thereby causing an undesired flow pattern.

Accordingly it is an objective of the present invention to provide an improved intake control device for reducing the pump loss with an improved flow characteristic of the air flowing into the combustion chamber.

According to the present invention, this objective is performed by the air intake control device as defined in claim 1.

When an engine runs under low load conditions, the secondary valve is closed and all the intake air is introduced through the low speed air passage to the combustion chamber. The low speed air passage is provided with the intake opening-closing valve for closing an intake opening-closing section during the downward stroke of a piston so that only the air present on the downstream side of said section is taken in. Shortly after the piston turns to the upward stroke, the intake valve is closed and approximately at the same time the intake opening-closing valve is opened to introduce the atmosphere to the downstream side of the intake opening-closing valve. When the engine load increases, the second valve is opened such that the major portion of the intake air will bypass the intake opening-closing valve to reach the combustion chamber through an intake passage of a larger cross-section.

Preferred embodiments of the present invention are laid down in dependent claims.

Hereinafter, the present invention is illustrated and explained in greater detail by means of a preferred embodiment in conjunction with accompanying drawings, wherein:
Fig 1 is a schematic sideview in section of the intake control device according to the present invention attached to a cylinder head section of an engine; and
Fig 2 is a timing diagram of the intake valve and the intake opening-closing valve.

One end of an intake passage 2 of a four-cycle internal combustion engine 1 is connected to a combustion chamber 4 via an intake valve 3 while the other end thereof is connected to the atmosphere. A carburettor 50 of known type is interposed in said intake passage 2 and provided with an artificially controlled butterfly type throttle valve 5a and with an automatic valve 5b of a piston type to be closed when the engine runs with a low load. A piston 4a forming one wall of the combustion chamber 4 fits freely slidably to a cylinder 4b, and is covered with a cylinder head 4c from above.

A secondary valve 6 of a butterfly type to be opened when the engine load is high is provided in the portion of the intake passage 2 downstream of the throttle valve 5. Said intake passage 2 is provided with a low speed air passage 7 of a small cross-section bypassing said secondary valve 6. The low speed air passage 7 is provided with an intake opening-closing valve 9 driven in linked motion with a crankshaft (not shown in the drawing) via a cam shaft 8 for driving the intake valve and an exhaust valve.

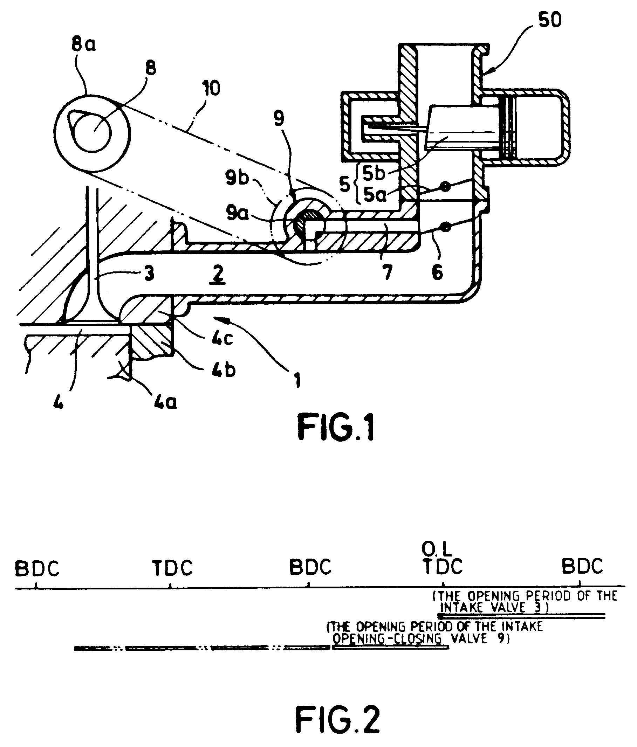

Namely, the intake opening-closing valve 9 is of a rotary shape and driven via a timing chain 10 or the like routed between a driven sprocket 9b attached to a valve body 9a of said valve 9 and a drive sprocket 8a attached to the cam shaft 8. Here, the opening and closing timings of the intake opening-closing valve 9 is set as shown in Fig 2 to be opened while said intake valve 3 is closed and to be closed while the intake valve is open. Further, considering the influence of the flow resistance of the intake airflow in the cylinder and the inertia of said flow, it is preferable to correct the opening and closing timings to some extent based on experiments rather than strictly linking the opening and closing timings to each other. Further in Fig 2, while the opening period of the intake opening-closing valve 9 in the case of a single-cylinder engine as in the present embodiment can be longer as shown with dash-and-double-dotted lines, it is necessary in the case of a multi-cylinder engine to make said period shorter as shown with solid lines.

Since the engine of the present embodiment is constituted as described above, the secondary valve 6 is closed when the engine runs under low load conditions and all the intake air is introduced through the low speed air passage 7 to the combustion chamber 4. The intake opening-closing valve 9 provided in the low speed air passage 7 is closed in a similar manner to that of the conventional Miller-cycle engine during the downward stroke of the piston 4a so that only the air present on the downstream side of said valve 9 is taken in. When the piston 4a turns to the upward stroke and the intake valve is closed, the intake opening-closing valve 9 opens approximately simultaneously to introduce the atmosphere to the downstream side of the valve 9. When the engine load increases, the secondary valve 6 is opened and most of the intake air bypasses the valve 9 and reaches the combustion chamber through the intake passage 2 of a larger cross-sectional area.

Although in the present embodiment a carborettor 50 is used, use is not limited to a carborettor but may of course be applied to an engine wherein a fuel injection pump is employed.

The device is equipped as described heretofore with different intake passages respectively for low load and high load with the low load side intake passage being provided with the intake passage opening-closing valve to be opened and closed in linked motion with the crankshaft, more particularly to be closed while the intake valve is open. As a result, the intake air is supplied at the time of low load operation where the pump loss is great through the low speed air passage 7 provided with the intake opening-closing valve 9 thereby reducing the pump loss in a similar manner to that of the so-called Miller-cycle engine. At the time of a high load operation on the other hand, since the secondary valve 6 is open and most of the intake air reaches the combustion chamber 4 through the intake passage of a large cross-sectional area, the increase in the airflow resistance is small. In addition to the reduction in the pump loss, a large amount of power loss due to the power required to operate a large-sized rotary valve is reduced thereby obtaining an engine of an excellent thermal efficiency.

## Claims

1. Air intake control device for an internal combustion engine comprising: a throttle valve (5) provided in an intake passage (2) upstream partially defined through an intake tube and downstream through a cylinder head (4c) connecting a combustion chamber (4) to the atmosphere via an intake valve (3); a secondary valve (6) provided downstream of said throttle valve (5) in said intake passage (2) said secondary valve (6) being adapted to be opened under high load engine conditions and to be closed under low load conditions; a low speed air passage (7) of a cross-section smaller than that of the intake passage (2), said low speed air passage (7) bypassing said secondary valve (6); and an intake opening/closing valve (9) provided in said low speed air passage (7) and being driven by a camshaft (8), **characterized in that** the downstream side of the low speed air passage (7) opens into the intake tube, and that in case of low load operation only the air present on the downstream side of the closed intake opening/closing valve (9) is taken in into the combustion chamber (4) through the opened intake valve (3) during a downward stroke of piston (4a) while atmospheric air is introduced through the opened intake opening/closing valve (9) to the downstream side of said intake opening/closing valve (9) during an upward stroke of the piston (4a) with the intake valve (3) being closed.

2. Air intake control device according to claim 1, **characterized in that** said intake opening/closing valve is a rotary valve (9) rotatably supported around an axis of rotation.

3. Air intake control device according to claims 1 or 2, **characterized in that** said intake opening/closing valve (9) is driven by said camshaft (8) via a chain drive (10) or the like, said camshaft (8) actuating said intake valve (3).

4. Air intake control device according to at least one of claims 1 to 3, **characterized in that** the upstream portion of said low speed air passage (7) opens into the intake tube downstream from said throttle valve (5) and upstream from said secondary valve (6).

## Patentansprüche

1. Lufteinlaß-Steuervorrichtung für eine Brennkraftmaschine mit: einem Drosselventil (5), das in einem Einlaßkanal (2) vorgesehen ist, der stromaufwärts zum Teil durch ein Einlaßrohr und stromabwärts durch einen Zylinderkopf (4c) begrenzt ist, der eine Brennkammer (4) über ein Einlaßventil (3) mit der Umgebung verbindet; ein Zweitventil (6), das stromab des Drosselventils (5) in dem Einlaßkanal (2) vorgesehen ist, wobei das Zweitventil (6) vorgesehen ist, unter hohen Motorlast-Bedingungen geöffnet zu sein und unter Niedriglast-Bedingungen geschlossen zu sein; einem Niedriggeschwindigkeits-Luftkanal (7) mit einem kleineren Querschnitt als der des Einlaßkanals (2), wobei der Niedriggeschwindigkeits-Luftkanal (7) das Zweitventil (6) umgeht; und einem Einlaß-Öffnungs-/Schließventil (9), das in dem Niedriggeschwindigkeits-Luftkanal (7) vorgesehen ist und durch eine Nockenwelle (8) angetrieben ist, **dadurch gekennzeichnet**, daß die stromabwärtige Seite des Niedriggeschwindigkeits-Luftkanals (7) in das Einlaßrohr mündet, und daß im Falle des Niedriglastbetriebs nur die Luft, die auf der stromabwärtigen Seite des geschlossenen Einlaß-Öffnungs-/SchließventilS (9) vorhanden ist, durch das geöffnete Einlaßventil (3) während eines Abwärtshubes des Kolbens (4a) in die Brennkammer (4) angesaugt wird, während Umgebungsluft durch das geöffnete Einlaß-Öffnungs-/Schließventil (9) auf die stromabwärtige Seite des Einlaß-Öffnungs-/Schließventils (9) während eines Aufwärtshubes des Kolbens (4a) zugeführt wird, wobei das Einlaßventil (3) geschlossen ist.

2. Lufteinlaß Steuervorrichtung nach Anspruch 1, **dadurch gekennzeichnet**, daß das Einlaß-Öffnungs-/Schließventil ein Drehventil (9) ist, das drehbar um eine Drehachse gelagert ist.

3. Lufteinlaß Steuervorrichtung nach Anspruch 1 oder 2, **dadurch gekennzeichnet**, daß das Einlaß-Öffnungs-/Schließventil (9) durch die Nockenwelle (8) über einen Kettenantrieb (10) oder dergleichen angetrieben ist, wobei die Nockenwelle (8) das Einlaßventil (3) betätigt.

4. Lufteinlaß Steuervorrichtung nach zumindest einem der Ansprüche 1-3, **dadurch gekennzeichnet,** daß der stromaufwärtige Abschnitt des Niedriggeschwindigkeits-Luftkanals (7) stromabwärts des Drosselventils (5) und stromaufwärts des Zweitventils (6) in das Einlaßrohr mündet.

## Revendications

1. Dispositif de commande d'admission d'air pour moteur à combustion interne, comportant : une vanne papillon (5) agencée dans un passage d'admission (2) défini partiellement en amont par un tube d'admission et en aval par une tête de cylindre (4c), reliant une chambre de combustion (4) à l'atmosphère via une soupape d'admission (3), une vanne secondaire (6) agencée en aval de la dite vanne papillon (5) dans le dit passage d'admission (2), la dite vanne secondaire (6) étant adaptée pour être ouverte dans des conditions de moteur sous forte charge ou pour être fermée dans des conditions de charge faible, un passage d'air pour faible vitesse (7) ayant une section transversale plus petite que celle du passage d'admission (2), le dit passage d'air pour faible vitesse (7) dérivant la dite vanne secondaire (6), et une vanne (9) d'ouverture/fermeture de l'admission agencée dans le dit passage d'air pour faible vitesse (7) entraînée par un arbre à came (8), caractérisé en ce que le côté aval du passage d'air pour faible vitesse (7) s'ouvre à l'intérieur du tube d'admission et en ce que dans le cas d'un fonctionnement sous faible charge seul l'air existant sur le côté aval de la vanne fermée (9) d'ouverture/fermeture de l'admission est envoyé jusqu'à l'intérieur de la chambre de comoustion (4) à travers la soupape d'admission (3) ouverte pendant une course descendante du piston (4a) alors que de l'air atmosphérique est introduit à travers la vanne ouverte (9) d'ouverture/fermeture de l'admission sur le côté aval de la dite vanne (9) d'ouverture/fermeture de l'admission pendant une course montante du piston (4a), la soupape d'admission (3) étant fermée.

2. Dispositif de commande d'admission d'air selon la revendication 1, caractérisé en ce que la vanne d'ouverture/fermeture d'admission est une vanne rotative (9) supportée de manière à pouvoir tourner autour d'un axe de rotation .

3. Dispositif de commande d'admission d'air selon la revendication 1 ou 2, caractérisé en ce que la dite vanne (9) d'ouverture/fermeture d'admission est entraînée par le dit arbre à came (8) via un entraînement par chaîne (10) ou analogue, le dit arbre à came (8) actionnant la dite soupape d'admission (3).

4. Dispositif de commande d'admission d'air selon au moins une des revendications 1 à 3, caractérisé en ce que la partie amont dudit passage d'air pour faible vitesse (7) s'ouvre dans le tube d'admission en aval par rapport à la dite vanne papillon (5) et en amont par rapport à la dite vanne secondaire (6).
